# EUROPEAN PATENT SPECIFICATION

(11) **EP 3 632 937 B1**
(45) Date of publication and mention of the grant of the patent: **13.04.2022**
(21) Application number: 18198633.2
(22) Date of filing: 04.10.2018
(51) Int. Cl.: C08F 118/08, C08J 3/24, C08F 261/04, C08L 31/04, C08L 29/04, C08F 8/12

(54) **HYDRAULIC BINDING AGENT FOR POLYMERS AND METHOD FOR PRODUCTION OF THE SAME**
HYDRAULISCHES BINDEMITTEL FÜR POLYMERE UND VERFAHREN ZU SEINER HERSTELLUNG
AGENT DE LIAISON HYDRAULIQUE POUR POLYMÈRES ET SON PROCÉDÉ DE PRODUCTION

(43) Date of publication of application: 08.04.2020
(73) Proprietor: Amelotec Ltd., N13 4BS London (GB)
(72) Inventor: de Jong, Frits Pieter Eduard Anton, 2765-426 Monte Estoril (PT)
(74) Representative: RCF - Protecting Innovation, S.A.

(56) References cited:
- WO-A1-2013/178746
- CN-C- 1 124 291
- US-B2- 6 958 369

## Description

### Field of the Invention

The present invention relates to a hydraulic binding agent for polymers (HBAP) comprising a poly(vinyl) alcohol (PVOH)-poly-(vinyl)acetic acid (Hydrophilic groups) (PVA) acetate (Hydrophobic groups) copolymer, a poly(vinyl alcohol-co-vinyl acetate) method for the production thereof and the use as binding agent for polar polymers and/or unpolar polymers.

### State of the art

The synthesis of polymer blends or copolymers is carried out to develop polymers with improved properties, e. g. mechanical properties, or properties that are generally not attainable in either single pure component. In the synthesis of polymer blends of polar and unpolar components there often arise miscibility problems.

To increase the miscibility of hardly miscible or immiscible blends binding agents or compatibilizers, respectively, are used. Compatibilizers are substances which increase the stability and/or morphology of a hardly miscible or an immiscible blend of polymers by creating interactions between the two previously immiscible polymers. Copolymers are formed when the proper functional groups in each component of the immiscible blend interact with the binding agents or compatibilizer. These interactions include hydrogen, ionic or covalent bonds.

Commonly, block or graft copolymers are used as compatibilizers, wherein the copolymer is made of the two components in the immiscible blend. The respective portions of the copolymer are able to interact with the two components of the immiscible blend to make the phase morphology more stable. The increased stability is caused by reducing the size of the phase-separated particles in the blend. The size reduction results from the lower interfacial tension, due to accumulating block copolymers at the interfaces between the two polymers. Thus the immiscible blend breaks up into smaller particles in the melt phase. In turn, these phase separated particles do not consolidate and grow because the interfacial tension is much lower, wherein the polymer blend is stabilized.

An example of this are ethylene-propylene copolymers (Rudin and Choi 2013). They are able to act as good compatibilizing agents for blends of polypropylene and low-density polyethylene. In this specific application, longer ethylene sequences are preferred in the copolymer. This is because cocrystallization also factors into this case, and the longer ethylene sequences will retain some residual crystallinity.

Horiuchi *et al.* discloses the modification of SEBS with maleic anhydride to enable adhesion to polar polymers such as polycarbonate (PC) (Horiuchi S, Matchariyakul N, Yase K, Kitano T (1997) "Compatibilizing effect of maleic anhydride functionalized SEBS triblock elastomer through a reaction induced phase formation in the blends of polyamide6 and polycarbonate: 2. Mechanical properties." Polymer 38, 59-78). Disadvantageously, this method is expensive.

Alternatively, poly(vinyl) alcohol (PVOH) is used as compatibilizer. PVOH is prepared by first polymerizing vinyl acetate, and the resulting poly-(vinyl)acetic acid (PVA) is converted to the PVOH, since the monomer, vinyl alcohol, is unstable with respect to acetaldehyde. Furthermore, PVOH can be prepared from other precursor polymers with formate or chloroacetate groups. The conversion of the polyesters is usually conducted by base-catalyzed transesterification with ethanol. PVOH has excellent film forming, emulsifying and adhesive properties. The properties of PVOH are dependent on humidity, thus with higher humidity more water is absorbed. The water, which acts as a plasticizer, will then reduce its tensile strength, but increase its elongation and tear strength.

DE 199 38 672 C2 discloses a compatibilizer derived from PVA and alkali water glass by hydrolysis for the use in the extrusion of starch with a hydrophobic polymer. EP 1 229 075 B1 describes a compatibilizer derived from PVA by 10 to 70% hydrolysis, preferred 30 to 40% hydrolysis. DE 197 50 846 C1 describes the synthesis of a compatibilizer, wherein PVA is hydrolysed with alkali silicate, bases and catalytic additives, preferred low-molecular hydroxyl compounds, at high temperatures, preferred 140°C, and high pressure.

Furthermore, DE 195 33 800 A1 discloses a compatibilizer comprising water glass, a polymer, e. g. PVOH, and an agent for neutralization selected from organic or inorganic acids, wherein the compatibilizer has a pH value of 5.5 to 7.0. The addition of 2.5 % (w/w) of the compatibilizer to a blend with starch and a polymer is sufficient to achieve a starch content of 75% (w/w) by preservation of the biological degradability.

DE 102 58 227 A1 discloses the use of compatibilizers in the production of a multilayer film comprising starch and polyester, wherein the compatibilizer comprises preferred a block copolymer with hydrophilic and hydrophobic blocks and mostly preferred a partial hydrolysed PVA.

WO 2015/1555198 A1 discloses a silage film obtained by stretching a thermoplastic composition comprising a polyolefin phase containing at least one polyolefin, a starch phase and at least one compatibilizer. The compatibilizer itself is present at the interface between the starch phase and the polyolefin phase or in one of each phases. Examples of this type are block copolymers, having polar and non-polar blocks, maleic anhydride grafted polyolefine, acrylic acid copolymers, ethylene vinyl acetate copolymers, ethylene vinyl alcohol copolymers or partially hydrolyzed and saponified polyvinylacetate.

WO 2013/178746 A1 concerns a biaxially stretched article made from a thermoplastic composition comprising a polyolefin phase, containing at least one polyolefin, a starch phase containing thermoplastic starch and a compatibilizer. Said compatibilizer is basically selected from the group of compatibilizers mentioned for WO 2015/1555198 A1

Disadvantages of the disclosed compatibilizers are the insufficient binding or cross-linking capabilities of polar and unpolar polymers and the acetic acid odour of the compatibilizers comprising PVA as well as the final copolymer.

### Object of the present invention

The object of the present invention is to provide an odourless and colourless (Hydraulic, Oxygen/Nitrogen barrier providing,) binding agent for polymers with a high (Barrier and Cross-linking) binding capacity and a method of production thereof.

### Character of the present invention

The object has been solved by the method for production of a hydraulic binding agent for polymers (HBAPcomprising the following steps:
a. Provision of a poly(vinyl alcohol) (PVOH) solution,
b. Adjustment of pH value of the solution to pH 7.5 to 8.2,
c. Addition of vinyl acetate to the solution and polymerization to poly(vinyl acetate) (PVA),
d. Addition of at least one base at a temperature of 85 to 155°C and adjustment of pH value 7.0 to 7.2 , and
e. Cross-linking by addition of phosphoric acid and/or borax decahydrate at a temperature between 85 and 75°C followed by cooling down to temperatures between 55 and 25°C.

Poly(vinyl)alcohol (PVOH) according to the invention is a polymer which is produced by partial or full hydrolysis of poly(vinyl)acetic acid (PVA).

In a further embodiment the PVOH is 70% to 90% hydrolysed PVOH, preferred 88% hydrolysed PVOH. As used herein, the term "hydrolysed poly(vinyl)alcohol (PVOH)" refers to a poly(vinyl) alcohol (PVOH)-poly(vinyl)acetic acid (PVA) copolymer which is produced by hydrolysis of poly-(vinyl)acetic acid (PVA), wherein "% (n/n)" refers to the hydrolysis degree or the amount of poly(vinyl) alcohol (PVOH) in relation to the poly(vinyl) alcohol (PVOH)-poly(vinyl)acetic acid (PVA) copolymer.

In a further preferred embodiment, the provision of a solution of PVOH (protective colloid) according to step
a) is carried out by suspension in an aqueous solution, mostly preferred in deionized water.

In an embodiment the concentration of the protective colloid suspension is 5% to 15% (w/w), preferred 10% (w/w). As used herein, "% (w/w)" refers to the mass of the protective colloid relating to the mass of the protective colloid suspension.

In a further embodiment the suspension of a protective colloid in a solvent is carried out with a constant agitation.

In a further embodiment the suspension of a protective colloid in a solvent is carried out at a temperature between 90°C and 95°C.

The colloid can be suspended at lower temperatures, but the reaction is carried out at temperatures between 80°C and 90°C. Higher temperatures, are not recommended as unwanted side reactions, (yellowing coloring) due to the increased reactivity of the Reactant/PVOH/PVA can occur. On another note, the deionized water should not boil, when under atmospheric pressure.

According to the invention, the provision of a protective colloid, preferred the provision of a suspension of a protective colloid in a solvent, is followed by the adjustment of the pH value according to step b) to pH 7.5 to 8.2.

In an embodiment the adjustment of the pH value according to step b) is carried out by addition of at least one base. In an embodiment the base is selected from carbonates, preferred the base is sodium bicarbonate. Advantageously, the addition of at least one carbonate produces a buffer solution. As used herein, the term "buffer" refers to mixture of a weak acid and its conjugate base or a mixture of a weak base and its conjugate acid, wherein the addition of an acid or a base does not change the pH value of the mixture.

In a further embodiment the adjustment of the pH value according to step b) is carried out at a temperature between 50°C and 85°C, preferably at a temperature between 50°C and 55°C.

In a further embodiment the addition of vinyl acetate according to step c) is carried out with the weight ratio of PVOH to vinyl acetate of 1:10 (w/w).

Range of the weight ratio of PVOH to vinyl acetate of 1:10 (w/w), 1:15 w/w, 1:20 w/w and every value in between.

In a further embodiment the addition of vinyl acetate according to step c) is carried out continuously and/or stepwise. In an embodiment the addition of vinyl acetate according to step c) is carried out with a mass flow rate of 0.50 kg/h to 1.50 kg/h. In a preferred embodiment the addition of vinyl acetate according to step c) is carried out by addition of 5% (w/w) vinyl acetate with a mass flow rate of 0.73 kg/h and addition of 95% (w/w) with a mass flow rate of 1.22 kg/h.

Advantageously, the addition of vinyl acetate induces the polymerization.

In a further embodiment step c) is carried out at a temperature between 76°C and 80°C.

The polymerization starts at 80°C, the "temperature range" is merely just a tolerance factor of the measurement transducers. Higher temperatures, are not recommended as unwanted side reactions due to the increased reactivity of the PVOH/PVA can occur.

In a further embodiment the method for production of a HBAP according to the invention comprises the addition of an initiator before step c) or during step c) or before and during step c). In an embodiment the addition of an initiator is carried out before, during and after the addition of vinyl acetate. In a preferred embodiment the addition of an initiator is carried out before the addition of vinyl acetate, every 30 min during the addition of vinyl acetate and after the addition of vinyl acetate. The vinyl acetate was based upon a conventional sourced ethylene and sourced from a renewable sourced ethylene.

In an embodiment the initiator is an azo compound or peroxide, preferred the initiator is selected from azobisisobutyronitrile, benzoyl peroxide, dilauroyl peroxide, di-*tert*-butyl peroxide, diisopropyl peroxydicarbonate or potassium persulfate, mostly preferred the initiator is potassium persulfate. Advantageously, the initiator forms free radicals and thus initiates the polymerization.

In a further embodiment the addition of vinyl acetate according to step c) is carried out with the weight ratio of initiator to vinyl acetate of 1:270 (w/w).

1:260 (w/w), 1:265 (w/w). 1:270 (w/w). (preferred) 1:275 (w/w). 1:280 (w/w). 1:285 (w/w).

In an embodiment step c) is continued for 30 min to 24 h after the initial addition of vinyl acetate, preferred 1 h after the addition of vinyl acetate. In an embodiment step c) is continued until the polymerization reaction is finished. The polymerization reaction is finished, when the pH value does not change anymore.

The pH value after the polymerization reaction ranges between 5.9 to 6.5 In a further embodiment the method for production of a HBAP according to the invention comprises the addition of a reducing agent after step c).

In an embodiment the reducing agent is selected from the same type of additives that are used with multiple functionality depending on the temperatures act as cross linker initiator, reducing agent or even as decoloration agent in the case of phosphoric acid and lithium hydroxide preferred the reducing agent is sodium bisulphite (NaHSO3). Advantageously, the reducing agent reduces the initiator and thus prevents side reactions.

In a further embodiment the addition of a reducing agent is carried out at a temperature between 40°C and 45°C.

In a further embodiment the addition of a reducing agent is carried out with a constant agitation.

The hydrolysis of poly(vinyl acetate) (PVA) in step d) is carried out by addition of at least one base.

The majority of acetic acid is converted into sodium acetate, CO₂ and H₂O.

The hydrolysis of poly(vinyl acetate) (PVA) is carried out at a temperature of 85 to 155°C and adjustment of a pH value between pH 7.0 and 72.

In a further embodiment the hydrolysis of poly(vinyl acetate) (PVA) is carried out continuously and/or stepwise. In a further embodiment the addition of at least one base is carried out continuous by spray dosing. Advantageously, the continuous hydrolysis of poly(vinyl acetate) (PVA) prevents local overheating.

In a further embodiment the hydrolysis of poly(vinyl acetate) (PVA) is carried out with a mass flow rate of 3.00 kg/h to 4.50 kg/h, preferred a mass flow rate of 3.83 kg/h.

In an embodiment the at least one base is selected from sodium hydroxide, sodium methoxide, potassium hydroxide, guanidine carbonate, sodium methyl carbonate and sodium ethoxide, preferred the at least one base is sodium hydroxide.

The hydrolysis of PVA is carried out at a temperature of 85°C to 155°C. In a preferred embodiment the hydrolysis of PVA is carried out by heating to a temperature of 85°C at the beginning and at 128°C at the end. Advantageously, the hydrolysis of PVA at a temperature of 85°C prevents local overheating.

In an embodiment the hydrolysis of PVA is a partial hydrolysis. Advantageously, the hydrolysis of PVA does not disrupt the long-chain structure of PVA.

The hydrolysis of PVA is carried out by the further addition of at least one base to control the pH value to pH 7.0 to 7.2. In an embodiment the base is selected from carbonates, preferred the base is sodium bicarbonate.

In an embodiment the hydrolysis of PVA is followed by crystallization, preferably at a temperature between 45°C and 65°C.

The cross-linking however takes place at temperatures between 85°C and 75°C as only in this range the mentioned substances phosphoric acid and sodium tetraborate decahydrate act as a cross-linking agent. At temperatures lower and in a later stage of the process, at temperatures between 55°C and 25°C, the above-mentioned additives are used to eliminate remaining sodium acetate into CO₂ and H₂O or the remaining acetic acid into H₂O. Therefore, two dosing stages are introduced.

According to the invention, the steps a) to d), preferably the steps a) to d) and the crystallization, are followed by step e), a cross-linking by addition of at least one cross-linker. As used herein, the term "cross-linker" refers to a substance with at least two functional groups, which reacts with polymers and thus forms covalent bonds between two polymers or in between one polymer. The cross-linker is selected from phosphoric acid and/or sodium tetraborate decahydrate

The mentioned additives have a different functionality at different temperature ranges they need to be dosed controlled and separately in the range of the required pH values.

In a further embodiment the cross-linking according to step e) is carried out by addition of phosphoric acid and then sodium tetraborate decahydrate,

In an embodiment the cross-linking according to step e) is carried out by addition of 0.2% to 1.5% phosphoric acid related to the mass of the reaction mixture (w/w).

In an embodiment the cross-linking according to step e) is carried out by addition of 0.5% to 2.0% sodium tetraborate decahydrate in relation to the reaction mixture (w/w), preferred by addition of 1.1% to 1.5% sodium tetraborate decahydrate in relation to the reaction mixture (w/w), mostly preferred by addition of 1.3% sodium tetraborate decahydrate in relation to the reaction mixture (w/w).

In a further embodiment the cross-linking according to step e) is carried out until a constant pH value between pH 7.2 and 10, preferred pH 8.6 and 9.0, is obtained.

In a further embodiment the cross-linking according to step e) is carried out with a constant agitation. Advantageously, the cross-linking increases the molecular weight of the HBAP. The advantages of an increased molecular weight are that a higher temperature degradation is reached and the resulting products have a higher E-modul

Further advantageously, the residual still active cross-linking additives adds further cross-linking ability for polar polymers to the HBAP.

The HBAP in a broader sense acts also as a cross linker between polar and non-polar polymers binding the polymers by its OH groups - poly(vinyl alcohol-co-vinyl acetate)

Basic principle:

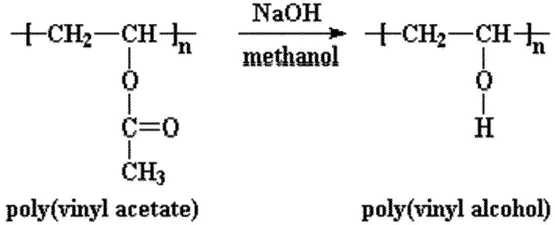

HBA Principle:

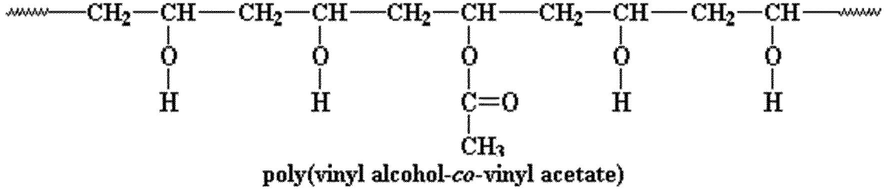

In an embodiment the crystallization of HBAP is carried out by cooling to 40°C to 100°C, preferred 48°C to 60°C.

Temperature of the polymer is > 100°C and is in a melted (honey liquid) state Cooling is initiated and between 85°C and 75°C the high reaction range, an initial cross-linking phase is started by spray dosing 0.42 % (vol.) in which diluted 0.2 % to 0.6 (weight) sodium tetraborate decahydrate, sodium carbonate, lithium hydroxide with a mass temperature between 85 and 75°C.

The high reaction temperature will trigger the cross linking. This is the end of a high reaction phase

The next phase will be a less to non-reactive stage. The polymer is cooled down further between 55 and 45°C a partial cross-linking phase is started. This stage however is used to eliminate the sodium acetate and acetic acid from the polymer bonded, saturated diluted in the H₂O released from the polymer. We will provide analytics of the different effluent obtained by separating and drying the polymer slurry. In this stage mainly sodium carbonate, lithium hydroxide is used.

At a temperature range between 45 and 30°C no cross linking is observed, only typical reaction between the remaining acetic acid or sodium acetate occurs eliminating all remaining acetic acid.

The present invention further comprises a hydraulic binding agent for polymers (HBAP) produced according to the method of the invention and comprising a poly(vinyl) alcohol (PVOH)-poly-(vinyl)acetic acid (PVA) copolymer, wherein PVOH and PVA are distributed statistically in the PVOH-PVA copolymer, wherein the hydraulic binding agent for polymers (HBAP) has an acetic acid (free acidic acid) content of 0.01% to 2 %, wherein the hydraulic binding agent for polymers (HBAP) has a residual moisture of 10% to 30 % (w/w) .

As used herein, the term "hydraulic binding" refers to a qualitative ability to react chemically by the addition of water. Advantageously, the hydraulic binding results in preserved or increased strength in water.

As used herein, the term "copolymer" refers to a polymer comprising two or more different monomers.

As used herein, the term "statistically distributed" refers to a copolymer wherein the sequence of the monomer residues is randomly.

According to the invention the HBAP has a preferred acetic acid content of 0.01 % to 1 % in relation to the HBAP (w/w).

As used herein, the term "acetic acid content" refers to free acetic acid. The acetic acid content can be determined by an enzymatic assay. In an embodiment, the enzymatic assay comprises an acetyl-coenzyme A synthetase, wherein acetic acid reacts with adenosine triphosphate (ATP) and coenzyme A (CoA) to acetyl-CoA. Furthermore, the enzymatic assay comprises a citrate synthase, wherein acetyl-CoA reacts with oxaloacetate to citrate, and a L-malate dehydrogenase, wherein the oxaloacetate is synthesized from L-malate and nicotinamide adenine dinucleotide (NAD⁺). By the synthesis of oxaloacetate NADH is formed, whose absorbance is measured.

In a preferred embodiment the HBAP according to the invention has an acetic acid content between 0.1% and 1.5% in relation to the HBAP (w/w), mostly preferred between 0.1% and 0.5% in relation to the HBAP (w/w). Advantageously, the hydraulic binding agent for polymers (HBAP) is white (colourless) to off-white and odourless, in particular a smell without any acetic acid smell.

According to the invention the HBAP has a residual moisture of 10% to 30 %, preferably 25% by weight. The residual moisture can be determined by thermogravimetric analysis, infrared measurements or by Karl Fischer titration.

Advantageously, water acts as emulsifier and increases the stability of the HBAP in a blend of polymers, preferably at least one polar polymer and at least one unpolar polymer.

According to the invention the HBAP has a hydrolysis degree between 60% and 20% preferred 45 %

As used herein, the term "hydrolysis degree" refers to the amount of poly(vinyl alcohol) (PVOH) in the PVOH-poly-(vinyl)acetic acid (PVA) copolymer (w/w).

Advantageously, the HBAP shows a high ability to cross-link, respectively, polar polymers and/or unpolar polymers. As used herein, the term "polar polymer" refers to polymers with separated electrical charges and thus an electric dipole moment. As used herein, the term "unpolar polymer" refers to a polymer with a symmetric charge distribution and thus without an electric dipole moment.

Advantageously, the HBAP comprising a PVOH-PVA copolymer is stable to oils, fats and organic solvents and is partially soluble or insoluble in water.

The hydraulic binding agent for polymers (HBAP) according to the invention may be used in a blend comprising at least one polymer.

Advantageously, the HBAP influences the oxygen permeability, the nitrogen permeability and/or the water vapor permeability of a polymer blend, preferably reduces the oxygen permeability, the nitrogen permeability and/or the water vapor permeability of a polymer blend.

The oxygen permeability is measured in accordance with ASTM D-3985 at 23°C, 0% relative humidity and 100% oxygen on a film having a thickness of 15 µm to 60 µm. The permeability for water vapor is measured in accordance with ASTM F-1249 at 38°C and 100% relative humidity on a film having a thickness of 15 µm to 60 µm.

The HBAP according to the invention may be used between different layers of at least one polymer.

Another object of the invention is the use of the HBAP or a HBAP produced in a process according to the invention, as compatibilizer for at least one polar polymer and at least one apolar polymer.

The HBA is primarily used together with the physicochemical treatment of a starch (of all kinds).

The hydra binding and polymerisation/annealing of the starch is established during the physicochemical treatment of the starch (refers directly to the physicochemical patent).

Other ways of hydra binding polymers with the HBAP other than described in that particular patent were not examined.

As used herein, the term "binding agent" refers to a substance which increases the stability and/or morphology of an immiscible or hardly miscible blend of polymers by creating interactions between the two previously immiscible polymers. As used herein, the term "immiscible or hardly miscible blend" refers to a blend of polymers, which forms more than one phase. As used herein, the term "phase" refers to a region of space, throughout which all physical properties of a material are essentially uniform, e. g. density, index of refraction.

Advantageously, the HBAP increases the miscibility of the at least one polar and the at least one apolar polymer, preferably reduces the surface activity of the at least one polar polymer and at least one unpolar polymer and/or increases the adhesion of the at least one polar polymer and at least one unpolar polymer. Further advantageously, the HBAP crosslinks the at least one polar and the at least one unpolar polymer. Thus, the mechanical properties of the blend of the at least one polar and the at least one unpolar polymer are improved and/or properties are achieved that are not attainable in the single polymers.

The polar polymer is selected from carbohydrates, polyamide (PA), polycarbonate (PC), polyesters, polyethers, polyvinyl alcohol (PVOH), ethylene vinyl alcohol (EVOH), poly(methyl methacrylate) (PMMA) or acrylonitrile butadiene styrene (ABS).

The at least one polar polymer is selected from starch, preferably native, thermoplastic or chemically modified starch. Expediently, the at least one polar polymer can also be flour and/or another substance comprising starch.

As used herein, the term "thermoplastic starch" refers to a completely de-structured form of starch comprising at least one plasticizer.

In further embodiments the chemically modified starch is selected from oxidized starch, etherified starch, preferably starch that is substituted with ethyl and/or propyl groups; esterified starch, preferably starch that is substituted with acyl, propanoyl and/or butanoyl groups; or a combination of chemical modifications, e.g. etherified and esterified starch.

In further embodiments, the starch is selected from barley, cassava, corn, dioscorea, ginger, maize, potato, rice, sorghum, soy bean, sweet potato, tapioca, turmeric and/or wheat starch.

The apolar polymer is selected from polyolefins, preferably polypropylene (PP), polyethylene (PE) or polystyrene (PS), poly[styrene-b-(methylene-co-butylene)-b-styrene] triblock copolymers (SEBS) or polytetrafluoroethylene (PTFE).

In a preferred embodiment, the at least one apolar polymer is selected from high density polyethylene, medium density polyethylene, low density polyethylene and/or linear low-density polyethylene, especially preferred from low density polyethylene.

In a preferred embodiment, the HBAP or a HBAP produced in a process according to the invention, is used in polymer blends comprising starch, at least one polyester and at least one polyolefin, especially preferred 10% to 70% (m/m) starch, 5% to 40% (m/m) of the HBAP, 5% to 70% (m/m) of the at least one polyester and 5% to 70% (m/m) of the at least one polyolefin.

A method for the production of a polymer blend of least one polar polymer and at least one apolar polymer by the use of the HBAP according to the invention comprises the steps
a. Provision of a composition comprising at least one polar polymer, at least one apolar polymer and the HBAP according to the invention,
b. Co-extrusion of the composition.

In further embodiments, the method for the production of a polymer blend of least one polar polymer and at least one apolar polymer by the use of the HBAP according to the invention comprises at least one further step c), stretching of the composition after the co-extrusion of the composition in step b).

In one embodiment the method for the production of a polymer blend of least one polar polymer and at least one apolar polymer by the use of the HBAP according to the invention is carried out with water. Advantageously, water acts as plasticizer and catalyst.

### Example 1 Production of the hydraulic binding agent for polymers (HBAP)

6.997 kg deionised water and 0.750 kg polyvinyl alcohol (88% hydrolysed) are added to a reactor with an agitator, a temperature gauge, a pressure gauge, an electrical resistance steam coil to heat the mixture, an external jacket with air to cool the mixture and a reflux condenser. The reactor is heated to 90 to 95°C by electrical resistance or steam coil and the mixture is agitated with 72 rpm for 2 h. At 80 to 82°C 0.02 kg sodium hydroxide or sodium bicarbonate is added; the pH value is checked and if necessary adjusted to pH 7.5 to 8.2.

Adjust the pH with sodium hydroxide or sodium bicarbonate or lithium hydroxide last two dissolved in deionized water.

Because of the high reactivity of the additives and to prevent "spot reactions" all reactive additives may be dissolved in deionized water to create a better distribution and avoid intense "spot reactions"

At 78 to 80°C 0.0065 kg potassium persulfate dissolved in deionised water is added. At 76 to 80°C 0.3525 kg vinyl acetate is added for 30 min with a mass flow rate of 0.73 kg/h and 6.6975 kg vinyl acetate is added for 5.5 h with a mass flow rate of 1.22 kg/h.

Each 0.0016 kg potassium persulfate dissolved in deionised water is added every 30 min during and after the vinyl acetate addition.

The 0.0016 kg of potassium persulfate is dissolved in deionized water and added every 30 min to a total of 0,0065kg.

The reactor temperature is maintained at 76 to 80°C for 1 h. Afterwards the reactor is cooled to 40 to 45°C. Under further and continuous agitation 0.154 kg of a 40% sodium bisulphite solution is added. Afterwards the reactor is heated to 85°C and 2.879 kg of a 50% sodium hydroxide solution is added for 45 min with a mass flow rate of 3.83 kg/h. The reaction mixture is heated up additionally by adding sodium hydroxide solution and due to the exothermic heat resulting in this process. When a temperature of approximately 128°C is reached the external heating is stopped. The reaction mixture temperature reaches 135°C to 155°C because of the exothermic reaction heat. After a reaction time of about 15 min the reaction is completed, when the pH value is about 7. Afterwards the reaction mixture being under pressure is led into a mixer in a throttled state (isenthalpic process) and decompressed to atmospheric pressure. During the decompression cooling takes place to 100°C to 90°C. The feeding valve is opened and 0.002% to 0.005% phosphoric acid dissolved in deionized water (first cross-linking phase) is spray dosed over a period between 2 to 3 minutes into the mixture under slow stirring. The reaction time is instant. The reaction is completed, when the pH value is stable at pH 6.6 to 7. Alternatively 0.05 to 0.25% borax decahydrate dissolved in deionized water (high reaction cross-linking phase) is spray dosed over a period between 2 to 5 minutes under stirring to the reaction mixture with a temperature of 85°C to 75°C.

After a reaction time of approximately 2 minutes the reaction is completed, when the pH value is stable at pH 6.6 to 7. The reaction mixture is cooled down to a temperature of approximately 65°C. The pH value is measured, and the quantity of sodium bicarbonate (second cross-linking phase) required, dissolved in deionized water is added spray dosed until a pH value of pH 7.4 to pH 9.8 is reached. Cutting knifes (of a plough share mixer) are switched on after leaving the entire quantity in the mixer at a temperature between 35°C and 45°C. At 60°C the crystallization process of the HBA starts and is finalized at a temperature of 45°C.

### Example 2 Characterization of the HBAP

The HBAP is partially water soluble. The HBAP has an ideal grain size of < 1mm in aqueous solution. After the drying process, the HBA is a white to slightly off-white, odourless powder and contains a residual moisture of 15% to 38%, an acetic acid content of 0.1 % to 1 % and pH value of pH 8.0 to pH 9.4.

The residual moisture is determined by thermogravimetric analysis, infrared measurements or by Karl Fischer titration.

The acetic acid content is determined by an enzymatic assay comprising an acetyl-coenzyme A synthetase, wherein acetic acid reacts with adenosine triphosphate (ATP) and coenzyme A (CoA) to acetyl-CoA. Furthermore, the enzymatic assay comprises a citrate synthase, wherein acetyl-CoA reacts with oxaloacetate to citrate, and a L-malate dehydrogenase, wherein the oxaloacetate is synthesized from L-malate and nicotinamide adenine dinucleotide (NAD⁺). By the synthesis of oxaloacetate NADH is formed, whose absorbance is measured.

### Example 3 Method for the use of the HBAP as binding agent

The HBAP is used as binding agent between polyethylene, preferably low-density polyethylene (LDPE), commercially available from INEOS having an MFI of about 5 g/10min as measured according to ISO 1133 at 190°C and 2.16 kg and having a density of about 919 kg/m³, and ethylene vinyl alcohol (EVOH), The composition was prepared by feeding the components to a first zone of a twin screw co-rotating extruder. The temperature profile of the extruder was 30-60-140-170-170-140-110°C at a screw speed of 350 rpm. The composition was blown to a film by known method, using an Evolution Ultra Stretch 2.0 1800S Unit with an in-line haul-off stretch ratio in machine direction of 1:0.5 to 1:8 and a stretch ratio in transverse direction only by a blow-up ratio between 1:2 to 1:5 at a temperature between 30°C and 90°C. The resulting polymer film is 8 to 180 µm thick.

### Cited non-patent literature

Rudin A., Choi P (2013) The Elements of Polymer Science and Engineering. Academic Press, Oxford, 3rd Edition.

## Claims

1. Method for production of an hydraulic binding agent for polymers (HBAP) comprising the following steps:
a) Provision of a poly(vinyl)alcohol (PVOH) solution,
b) Adjustment of pH value 7.5 to 8.2,
c) Addition of vinyl acetate to the solution and polymerization to poly(vinyl acetate) (PVA),
d) Addition of at least one base at a temperature of 85 to 155°C and adjustment of pH value 7.0 to 7.2,
e) Cross-linking by addition of phosphoric acid and/or borax decahydrate at a temperature between 85°C and 75°C followed by cooling down to temperatures between 55°C and 25°C.

2. Method of claim 1, wherein the weight ratio of poly(vinyl)alcohol (PVOH) to vinyl acetate is 1:10 (w/w).

3. Method of claim 1 or claim 2, wherein the addition of vinyl acetate is done continuous and/or stepwise.

4. Method of one of the claims 1 to 3, wherein an azo compound or peroxide is added before and/or during the addition of vinyl acetate.

5. Method of one of the claims 1 to 4, wherein a reducing agent is added after the addition of vinyl acetate.

6. Method of one of the claims 1 to 5, wherein the addition of at least one base is done continuous by spray dosing.

7. Method of one of the claims 1 to 6, wherein the at least one base is selected from sodium hydroxide, sodium methoxide, potassium hydroxide, guanidine carbonate, sodium methyl carbonate and sodium ethoxide.

8. Method of one of the claims 1 to 7, wherein the method for production of an HBAP is followed by crystallization.

9. Hydraulic binding agent for polymers (HBAP) produced according to the method of claim 1 comprising a poly(vinyl alcohol-co-vinyl acetate),
wherein vinyl alcohol (VOH) and vinyl acetate (VAc) are distributed statistically in the PVOH-PVA copolymer,
wherein the hydraulic binding agent for polymers (HBAP) has a free acetic acid content of 0.01 to 2%, as measured in w/w in relation to the HBAP,
wherein the hydraulic binding agent for polymers (HBAP) has residual moisture of 10 to 30 %.

10. Odourless hydraulic binding agent for polymers (HBAP) of claim 9, wherein the acetic acid content is 0.01 to 1 %

11. Use of the hydraulic binding agent for polymers (HBAP) of one of the claims 9 to 10 as compatibilizer for polar polymers and apolar polymers.

## Patentansprüche

1. Verfahren zur Herstellung eines hydraulischen Bindemittels für Polymere (HBAP) umfassend die folgenden Schritte:
a) Bereitstellung einer Poly(vinyl)alkohol (PVOH)-Lösung,
b) Einstellung des pH-Wertes 7,5 bis 8,2,
c) Zugabe von Vinylacetat zu der Lösung und Polymerisation für Poly(vinylacetat) (PVA),
d) Zugabe mindestens einer Base bei einer Temperatur von 85 bis 155 °C und Einstellung des pH-Wertes 7,0 bis 7,2,
e) Vernetzung durch Zugabe von Phosphorsäure und/oder Boraxdecahydrat bei einer Temperatur zwischen 85 °C und 75 °C, anschließend Abkühlen bis Temperaturen zwischen 55 °C und 25 °C.

2. Verfahren nach Anspruch 1, wobei das Gewichtsverhältnis von Poly(vinyl)alkohol (PVOH) zu Vinylacetat 1:10 (Gew.%) beträgt.

3. Verfahren nach Anspruch 1 oder Anspruch 2, wobei die Zugabe von Vinylacetat kontinuierlich und/oder schrittweise erfolgt.

4. Verfahren nach einem der Ansprüche 1 bis 3, wobei vor und/oder während der Zugabe von Vinylacetat eine Azoverbindung oder ein Peroxid zugegeben wird.

5. Verfahren nach einem der Ansprüche 1 bis 4, wobei nach der Zugabe von Vinylacetat ein Reduktionsmittel zugegeben wird.

6. Verfahren nach einem der Ansprüche 1 bis 5, wobei die Zugabe mindestens einer Base kontinuierlich durch Sprühdosierung erfolgt.

7. Verfahren nach einem der Ansprüche 1 bis 6, wobei die mindestens eine Base aus Natriumhydroxid, Natriummethoxid, Kaliumhydroxid, Guanidincarbonat, Natriummethylcarbonat und Natriumethoxid ausgewählt ist.

8. Verfahren nach einem der Ansprüche 1 bis 7, wobei sich an das Verfahren zur Herstellung eines HBAP eine Kristallisation anschließt.

9. Hydraulisches Bindemittel für Polymere (HBAP) nach dem Verfahren des Anspruchs 1 umfassend ein Poly(vinylalkohol-Covinylacetat) herstellt,
wobei Vinylalkohol (VOH) und Vinylacetat (VAc) in dem PVOH-PVA-Copolymer statistisch verteilt sind,
wobei das hydraulische Bindemittel für Polymere (HBAP) einen Gehalt an freier Essigsäure von 0,01 bis 2 % wie in Gew.% in Verhältnis zum HBAP gemessen, aufweist,
wobei das hydraulische Bindemittel für Polymere (HBAP) eine Restfeuchte von 10 bis 30 % aufweist.

10. Geruchloses hydraulisches Bindemittel für Polymere (HBAP) nach Anspruch 9, wobei der Essigsäuregehalt 0,01 bis 1 % beträgt.

11. Verwendung des hydraulischen Bindemittels für Polymere (HBAP) nach einem der Ansprüche 9 bis 10 als Verträglichkeitsvermittler für polare Polymere und apolare Polymere.

## Revendications

1. Procédé de fabrication d'un liant hydraulique pour polymères (HBAP) comprenant les étapes suivantes:
a) Mise à disposition d'une solution de poly(vinyl)alcool (PVOH),
b) Ajustement de la valeur du pH de 7,5 à 8,2,
c) Addition d'acétate de vinyle à la solution et polymérisation pour obtenir de l'acétate de poly(vinyle) (PVA),
d) Addition d'au moins une base à une température de 85 à 155 °C et ajustement de la valeur du pH de 7,0 à 7,2,
e) Réticulation par addition d'acide phosphorique et/ou de décahydrate de borax à une température entre 85 °C et 75 °C, suivie d'un refroidissement jusqu'à des températures entre 55 °C et 25 °C.

2. Procédé selon la revendication 1, dans lequel le rapport pondéral de l'alcool poly(vinylique) (PVOH) à l'acétate de vinyle est de 1:10 (p/p).

3. Procédé selon la revendication 1 ou la revendication 2, dans lequel l'addition d'acétate de vinyle est effectuée en continu et/ou par des étapes.

4. Procédé selon l'une des revendications 1 à 3, dans lequel un composé azoïque ou un peroxyde est ajouté avant et/ou pendant l'addition d'acétate de vinyle.

5. Procédé selon l'une des revendications 1 à 4, dans lequel un agent réducteur est ajouté après l'addition d'acétate de vinyle.

6. Procédé selon l'une des revendications 1 à 5, dans lequel l'addition d'au moins une base se fait en continu par dosage par pulvérisation.

7. Procédé selon l'une des revendications 1 à 6, dans lequel la base, au moins une est choisie parmi l'hydroxyde de sodium, le méthylate de sodium, l'hydroxyde de potassium, le carbonate de guanidine, le méthylcarbonate de sodium et l'éthylate de sodium.

8. Procédé selon l'une des revendications 1 à 7, dans lequel le procédé de production d'un HBAP est suivi d'une cristallisation.

9. Liant hydraulique pour polymères (HBAP) produit selon le procédé de la revendication 1 comprenant un acétate de poly(vinyle alcool-co-vinyle),
Dans lequel l'alcool vinylique (VOH) et l'acétate de vinyle (VAc) sont distribués statistiquement dans le copolymère PVOH-PVA,
Dans lequel le liant hydraulique pour polymères (HBAP) a une teneur en acide acétique libre de 0,01 à 2 %, en tant que mesurée en p/p par rapport au HBAP,
Dans lequel le liant hydraulique pour polymères (HBAP) a une humidité résiduelle de 10 à 30 %.

10. Liant hydraulique inodore pour polymères (HBAP) selon la revendication 9, dans lequel la teneur en acide acétique est de 0,01 à 1 %.

11. Utilisation du liant hydraulique pour polymères (HBAP) selon l'une des revendications 9 à 10 comme compatibilisant pour polymères polaires et polymères apolaires.
